# EUROPEAN PATENT APPLICATION

(11) **EP 4 465 699 A1**
(43) Date of publication of application: **20.11.2024**
(21) Application number: 22917949.4
(22) Date of filing: 10.01.2022
(51) Int. Cl.: H04W 40/12, H04W 8/00

(54) **MEASUREMENT REPORT REPORTING METHOD AND DEVICE**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2022/071142
(87) International publication number: WO 2023/130479

(57) **Abstract**

Embodiments of the present disclosure disclose a measurement report reporting method and device, which can be applied to systems such as Internet of vehicles, V2X and V2V. The method is performed by a first terminal, and comprises: obtaining a sidelink discovery reference signal received power (SD-RSRP) and a sidelink reference signal received power (SL-RSRP); and according to the SD-RSRP and the SL-RSRP, determining to send a measurement report to a base station. By implementing the embodiments of the present disclosure, the measurement report can be accurately reported.

## Description

### FIELD

The present disclosure relates to the field of communication, and more particularly to a method and a device for reporting a measurement report.

### BACKGROUND

Starting from the 3rd generation partnership project (3GPP) release 12 (R12), the long term evolution (LTE) supports the end-to-end communication in the cellular network. In vehicle to everything (V2X), communication can be carried out through the link between the base station and the terminal (such as the uplink (UL) and the downlink (DL)) or the sidelink (SL) between the terminals.

In the communication between the terminals, according to the transmitting-receiving relationship, the terminal that realizes communication with the base station through the relay of another terminal is called a remote terminal, and the terminal that provides the relay function is called a relay terminal.

### SUMMARY

Embodiments of the present disclosure provide a method and a device for reporting a measurement report, which may be applied to vehicle networking, such as vehicle to everything (V2X) communication, long term evolution-vehicle (LTE-V), vehicle to vehicle (V2V) communication, etc., or may be used in the field of intelligent driving, intelligent networked vehicles or the like, so as to at least solve the problem in the related art that, when the terminal evaluates whether to report the measurement report to the base station according to the SL-RSRP or the SD-RSRP, the trigger timing of reporting is different, i.e., the measurement report will be reported too early or too late.

In a first aspect, embodiments of the present disclosure provide a method for reporting a measurement report, which is applied to a first terminal, and includes: acquiring a sidelink discovery reference signal receiving power SD-RSRP and a sidelink reference signal receiving power SL-RSRP; and determining to send a measurement report to a base station according to the SD-RSRP and the SL-RSRP.

In this technical scheme, by implementing the embodiments of the present disclosure, the SD-RSRP and the SL-RSRP are acquired, and it is determined to send the measurement report to the base station according to both the SD-RSRP and SL-RSRP, so as to avoid the problem that when evaluating whether to report the measurement report to the base station according to the SL-RSRP or the SD-RSRP, the trigger timing of reporting is different, i.e., the measurement report will be reported too early or too late. Thus, when the SL-RSRP or the SD-RSRP is used to evaluate whether to report the measurement report to the base station, the timing of reporting is consistent, thereby reporting the measurement report accurately.

In a second aspect, embodiments of the present disclosure provide another method for reporting a measurement report, which is applied to a second terminal, and includes: sending a sidelink RRC message to a first terminal. The sidelink RRC message includes any one of: a first offset value, a second offset value, a first threshold value and a second threshold value; a third offset value and a third threshold value; and a first offset value, a second offset value, a first threshold value, a second threshold value, a third offset value and a third threshold value.

In a third aspect, embodiments of the present disclosure provide another method for reporting a measurement report, which is applied to a base station, and includes: sending a RRC message to a first terminal. The RRC message includes any one of: a first offset value, a second offset value, a first threshold value and a second threshold value; a third offset value and a third threshold value; and a first offset value, a second offset value, a first threshold value, a second threshold value, a third offset value and a third threshold value.

In a fourth aspect, embodiments of the present disclosure provide a device for reporting a measurement report, which has some or all functions of the first terminal realizing the method of the first aspect.

In an implementation, the device for reporting the measurement report includes a data acquisition module configured to acquire a SD-RSRP and a SL-RSRP; and a first sending module configured to determine to send the measurement report to a base station according to the SD-RSRP and the SL-RSRP.

In a fifth aspect, embodiments of the present disclosure provide another device for reporting a measurement report, which has some or all of the functions of the second terminal realizing the method of the second aspect.

In an implementation, the device for reporting the measurement report includes a second sending module configured to send a sidelink RRC message to a first terminal. The sidelink RRC message includes any one of: a first offset value, a second offset value, a first threshold value and a second threshold value; a third offset value and a third threshold value; and a first offset value, a second offset value, a first threshold value, a second threshold value, a third offset value and a third threshold value.

In a sixth aspect, embodiments of the present disclosure provide another device for reporting a measurement report, which has some or all of the functions of the base station realizing the method of the third aspect.

In an implementation, the device for reporting the measurement report includes a third sending module configured to send a RRC message to a first terminal. The RRC message includes any one of: a first offset value, a second offset value, a first threshold value and a second threshold value; a third offset value and a third threshold value; and a first offset value, a second offset value, a first threshold value, a second threshold value, a third offset value and a third threshold value.

In a seventh aspect, embodiments of the present disclosure provide a communication device, which includes a processor, and when the processor calls a computer program in a memory, the method of the first aspect is executed; or, when the processor calls the computer program in the memory, the method of the second aspect is executed; or, when the processor calls the computer program in the memory, the method of the third aspect is executed.

In an eighth aspect, embodiments of the present disclosure provide a communication device, which includes a processor and a memory, and a computer program is stored in the memory. The processor executes a computer program stored in the memory, to cause the communication device to execute the method of the first aspect; or, the processor executes the computer program stored in the memory, to cause the communication device to execute the method of the second aspect; or, the processor executes the computer program stored in the memory, to cause the communication device to execute the method of the third aspect.

In a ninth aspect, embodiments of the present disclosure provide a communication device, which includes a processor and an interface circuit, the interface circuit is configured to receive code instructions and transmitting the code instructions to the processor, and the processor is configured to execute the code instructions to cause the device to execute the method of the first aspect; or, the processor is configured to execute the code instructions to cause the device to execute the method of the second aspect; or, the processor is configured to execute the code instructions to cause the device to execute the method of the third aspect.

In a tenth aspect, embodiments of the present disclosure provide a computer-readable storage medium for storing instructions used by the above terminal equipment, and when the instructions are executed, the terminal equipment is caused to execute the method of the first aspect; or, when the instructions are executed, the terminal equipment is caused to execute the method of the second aspect; or, when the instructions are executed, the terminal equipment is caused to execute the method of the third aspect.

In an eleventh aspect, the present disclosure also provides a computer program product including a computer program, which, when run on a computer, causes the computer to execute the method of the first aspect, or causes the computer to execute the method of the second aspect, or causes the computer to execute the method of the third aspect.

In a twelfth aspect, the present disclosure provides a chip system, which includes at least one processor and an interface, for supporting the first terminal to realize the functions related to the first aspect, for example, determining or processing at least one of data and information related to the above method. In a possible design, the chip system further includes a memory, and the memory is configured to store computer programs and data necessary for the terminal equipment. The chip system may be composed of chips, and may also include chips and other discrete devices.

In a thirteenth aspect, the present disclosure provides a chip system, which includes at least one processor and an interface, for supporting the second terminal to realize the functions related to the second aspect, for example, determining or processing at least one of data and information related to the above method. In a possible design, the chip system further includes a memory, and the memory is configured to store computer programs and data necessary for the terminal equipment. The chip system may be composed of chips, and may also include chips and other discrete devices.

In a fourteenth aspect, the present disclosure provides a chip system, which includes at least one processor and an interface, for supporting the base station to realize the functions related to the third aspect, for example, determining or processing at least one of data and information related to the above method. In a possible design, the chip system further includes a memory, and the memory is configured to store computer programs and data necessary for the base station. The chip system may be composed of chips, and may also include chips and other discrete devices.

In a fifteenth aspect, the present disclosure provides a computer program which, when run on a computer, causes the computer to execute the method of the first aspect, or causes the computer to execute the method of the second aspect, or causes the computer to execute the method of the third aspect.

### BRIEF DESCRIPTION OF THE DRAWINGS

In order to more clearly explain the technical scheme in the embodiments of the present disclosure or the related art, the drawings needed in the embodiments of the present disclosure or the related art will be explained below.
Fig. 1 is an architecture diagram of a communication system according to an embodiment of the present disclosure.
Fig. 2 is a flow chart of a method for reporting a measurement report according to an embodiment of the present disclosure.
Fig. 3 is a flow chart of another method for reporting a measurement report according to an embodiment of the present disclosure.
Fig. 4 is a flow chart of another method for reporting a measurement report according to an embodiment of the present disclosure.
Fig. 5 is a flow chart of another method for reporting a measurement report according to an embodiment of the present disclosure.
Fig. 6 is a flow chart of another method for reporting a measurement report according to an embodiment of the present disclosure.
Fig. 7 is a flow chart of another method for reporting a measurement report according to an embodiment of the present disclosure.
Fig. 8 is a flow chart of another method for reporting a measurement report according to an embodiment of the present disclosure.
Fig. 9 is a flow chart of another method for reporting a measurement report according to an embodiment of the present disclosure.
Fig. 10 is a flow chart of another method for reporting a measurement report according to an embodiment of the present disclosure.
Fig. 11 is a flow chart of another method for reporting a measurement report according to an embodiment of the present disclosure.
Fig. 12 is a flow chart of another method for reporting a measurement report according to the embodiment of the present disclosure.
Fig. 13 is a structural diagram of a device for reporting a measurement report according to an embodiment of the present disclosure.
Fig. 14 is a structural diagram of another device for reporting a measurement report according to an embodiment of the present disclosure.
Fig. 15 is a structural diagram of another device for reporting a measurement report according to an embodiment of the present disclosure.
Fig. 16 is a structural diagram of a communication device according to an embodiment of the present disclosure.
Fig. 17 is a schematic structural diagram of a chip according to an embodiment of the present disclosure.

### DETAILED DESCRIPTION

In order to better understand a method and a device for reporting a measurement report disclosed in embodiments of the present disclosure, a communication system to which the embodiments of the present disclosure are applicable will be described below.

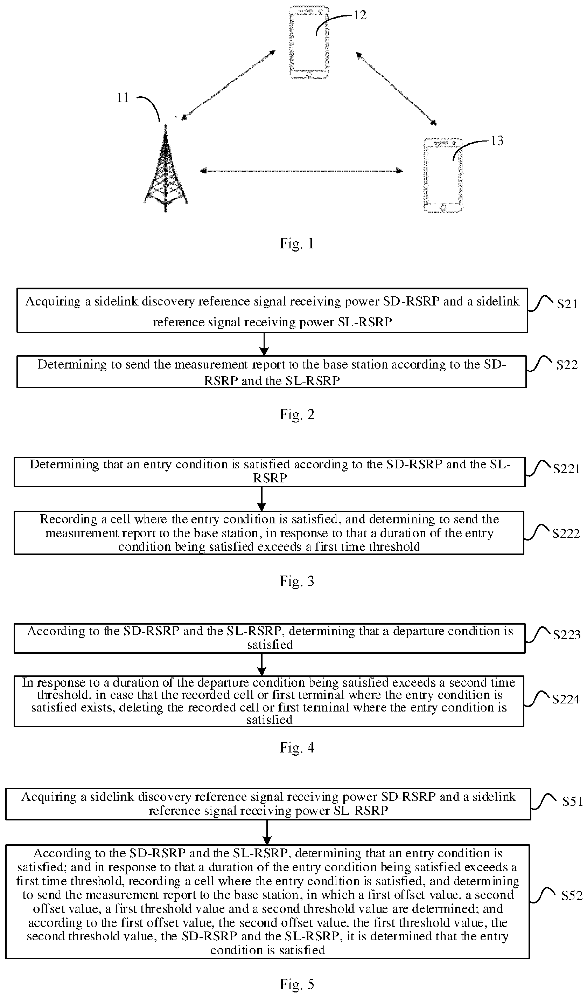

Referring to Fig. 1, Fig. 1 is an architecture diagram of a communication system according to an embodiment of the present disclosure. The communication system may include, but is not limited to, one base station, one remote terminal and one relay terminal. The number and form of apparatuses shown in Fig. 1 only serve as an example, and do not constitute a limitation to the embodiments of the present disclosure. In practical application, it may also include two or more base stations, two or more remote terminals and two or more relay terminals. The communication system shown in Fig. 1 includes one base station 11, one remote terminal 12 and one relay terminal 13, as an example.

It should be noted that the technical scheme of the embodiments of the present disclosure can be applied to various communication systems, for example, a long term evolution (LTE) system, a 5th generation (5G) mobile communication system, a 5G new radio (NR) system, or other new mobile communication systems in the future.

The base station 11 in the embodiments of the present disclosure is an entity on the network side for transmitting or receiving signals. For example, the base station 11 may be an evolved NodeB (eNB), a transmission reception point (TRP), a next generation NodeB (gNB) in the NR system, a base station in other mobile communication systems in the future or an access node in a wireless fidelity (WiFi) system. The embodiments of the present disclosure do not limit the specific technology and the specific equipment form adopted by the base station. The base station according to the embodiments of the present disclosure may be composed of a central unit (CU) and a distributed unit (DU), in which the CU may also be called a control unit. By adopting the CU-DU structure, the protocol layers of the base station, for example, can be separated, and some functions of the protocol layers are centralizedly controlled by the CU, while the functions of some or all of the rest protocol layers are distributed in the DU, and centralizedly controlled by the DU.

The remote terminal 12 and the relay terminal 13 in the embodiments of the present disclosure are entities on the user side for receiving or transmitting signals, such as mobile phones. The terminal may also be called a terminal equipment, a user equipment (UE), a mobile station (MS), a mobile terminal (MT) and so on. The terminal equipment may be a vehicle with a communication function, a smart vehicle, a mobile phone, a wearable device, a Pad, a computer with a wireless transceiving function, a virtual reality (VR) terminal equipment, an augmented reality (AR) terminal equipment, a wireless terminal equipment in the industrial control, a wireless terminal equipment in the self-driving, a wireless terminal equipment in the remote medical surgery, a wireless terminal equipment in the smart grid, a wireless terminal equipment in the transportation safety, a wireless terminal equipment in the smart city, a wireless terminal equipment in the smart home, etc. The embodiments of the present disclosure do not limit the specific technology and the specific equipment form adopted by the terminal equipment.

It can be understood that the communication system described in the embodiments of the present disclosure is for more clearly explaining the technical scheme of the embodiments of the present disclosure, and does not constitute a limitation on the technical scheme according to the embodiments of the present disclosure. Those skilled in the art may know that with the evolution of the system architecture and the emergence of new business scenarios, the technical scheme according to the embodiments of the present disclosure is also applicable to similar technical problems.

In the related art, the terminal adopts different transmission power control manners for the physical sidelink shared channel (PSSCH) according to the transmission manner during the sidelink transmission. If the unicast transmission is adopted, the congestion busy rate (CBR) of the resource pool, the channel quality between the terminal and the base station (RSRP) and the channel quality between the remote terminal and the relay terminal (SL-RSRP) need to be considered. If the multicast and the broadcast are adopted, the congestion busy rate (CBR) of the resource pool and the channel quality between the terminal and the base station need to be considered. The terminal measures the resource usages at all positions in the whole resource pool, and calculates and obtains that different resource pools may have different CBR measurement results.

The measurement reporting needs to meet the following conditions: when the channel measurement result between the remote terminal and the relay terminal is less than a certain threshold and the channel measurement result between the remote terminal and the cell is higher than a certain threshold, the measurement report is reported to the base station.

However, the channel measurement result between the remote terminal and the relay terminal may be the sidelink reference signal receiving power (SL-RSRP) obtained by measuring the sidelink communication signal, or the sidelink discovery reference signal receiving power (SD-RSRP) obtained by measuring the discovery signal. When there is the sidelink communication between the remote terminal and the relay terminal, only the SL-RSRP is used to evaluate whether to report the measurement report to the base station. When there is no sidelink communication, the SL-RSRP cannot be measured. At this time, the SD-RSRP may be used to evaluate whether to report the measurement report to the base station.

Since the sidelink communication signal and the discovery signal are transmitted in different ways, the transmission power is different. For the same relay terminal, the SL-RSRP and the SD-RSRP measured by the remote terminal will also be different, which leads to different trigger timing of reporting, i.e., the measurement report will be reported too early or too late, when the terminal evaluates whether to report the measurement report to the base station according to the SL-RSRP or the SD-RSRP.

Based on this, the embodiments of the present disclosure provide the method and the device for reporting the measurement report, so as to at least solve the problem in the related art that, when the terminal evaluates whether to report the measurement report to the base station according to the SL-RSRP or the SD-RSRP, the trigger timing of reporting is different, i.e., the measurement report will be reported too early or too late.

Next, the method and the device for reporting the measurement report according to the present disclosure will be introduced in detail with reference to the drawings.

Referring to Fig. 2, Fig. 2 is a flow chart of a method for reporting a measurement report according to an embodiment of the present disclosure.

As shown in Fig. 2, the method is applied to a first terminal, and may include, but is not limited to, the following steps.

In step S21, a sidelink discovery reference signal receiving power SD-RSRP and a sidelink reference signal receiving power SL-RSRP are acquired.

In step S22, according to the SD-RSRP and the SL-RSRP, it is determined to send the measurement report to the base station.

In the embodiments of the present disclosure, the first terminal may be a remote terminal.

In the embodiments of the present disclosure, the SD-RSRP and the SL-RSRP are acquired, and it is determined to send the measurement report to the base station according to both the SD-RSRP and the SL-RSRP, so as to avoid the problem that when the terminal evaluates whether to report the measurement report to the base station according to the SL-RSRP or the SD-RSRP, the trigger timing of reporting is different, i.e., the measurement report will be reported too early or too late. Thus, when the SL-RSRP or the SD-RSRP is used to evaluate whether to report the measurement report to the base station, the timing of reporting is consistent, thereby reporting the measurement report accurately.

As shown in Fig. 3, in some embodiments, step S22 includes the following steps

In step S221, according to the SD-RSRP and the SL-RSRP, it is determined that an entry condition is satisfied.

In embodiments of the present disclosure, the first terminal can determine that the entry condition is satisfied according to the SD-RSRP and the SL-RSRP.

In step S222, in response to that a duration of the entry condition being satisfied exceeds a first time threshold, a cell where the entry condition is satisfied is recorded, and it is determined to send the measurement report to the base station.

The first time threshold may be set as required, which is not specifically limited by the embodiments of the present disclosure.

In embodiments of the present disclosure, the first terminal determines that the entry condition is satisfied according to the SD-RSRP and the SL-RSRP, and records the cell where the entry condition is satisfied and determines to send the measurement report to the base station, in response to that the duration of the entry condition being satisfied exceeds the first time threshold.

In embodiments of the present disclosure, when the first terminal determines that the entry condition is satisfied according to the SD-RSRP and the SL-RSRP, the duration of the entry condition being satisfied is counted, and when the duration of the entry condition being satisfied exceeds the first time threshold, the cell where the entry condition is satisfied is recorded, and it is determined to send the measurement report to the base station.

It should be noted that, in embodiments of the present disclosure, according to the SD-RSRP and the SL-RSRP, it is determined that the entry condition is satisfied, i.e., the entry condition may be correlated with both the SD-RSRP and the SL-RSRP, and it is determined that the entry condition is satisfied according to both the SD-RSRP and the SL-RSRP.

In some embodiments, the measurement report includes the cell or the first terminal where the entry condition is satisfied.

In some embodiments, the measurement report carries the SD-RSRP and the SL-RSRP.

As shown in Fig. 4, in some embodiments, step S22 includes the following steps.

In step S223, according to the SD-RSRP and the SL-RSRP, it is determined that a departure condition is satisfied.

In embodiments of the present disclosure, the first terminal can determine that the departure condition is satisfied according to the SD-RSRP and the SL-RSRP.

In step S224, in response to a duration of the departure condition being satisfied exceeds a second time threshold, in case that the recorded cell or first terminal where the entry condition is satisfied exists, the recorded cell or first terminal where the entry condition is satisfied is deleted.

The second time threshold may be set as required, which is not specifically limited by the embodiments of the present disclosure.

In embodiments of the present disclosure, the first terminal determines that the departure condition is satisfied according to the SD-RSRP and the SL-RSRP, and deletes the recorded cell or first terminal where the entry condition is satisfied, in case that the recorded cell or first terminal where the entry condition is satisfied exists, in response to that the duration of the departure condition being satisfied exceeds the second time threshold.

In embodiments of the present disclosure, when the first terminal determines that the departure condition is satisfied according to the SD-RSRP and the SL-RSRP, the duration of the departure condition being satisfied is counted, and when the duration of the departure condition being satisfied exceeds the second time threshold, in case that the recorded cell or first terminal where the entry condition is satisfied exists, the recorded cell or first terminal where the entry condition is satisfied is deleted.

It should be noted that in embodiments of the present disclosure, according to the SD-RSRP and the SL-RSRP, it is determined that the departure condition is satisfied, i.e., the departure condition may be correlated with both the SD-RSRP and the SL-RSRP, and it is judged that the departure condition is satisfied according to both the SD-RSRP and the SL-RSRP.

Referring to Fig. 5, Fig. 5 is a flow chart of another method for reporting a measurement report according to an embodiment of the present disclosure.

As shown in Fig. 5, the method is applied to a first terminal, and the method may include, but is not limited to, the following steps.

In step S51, a sidelink discovery reference signal receiving power SD-RSRP and a sidelink reference signal receiving power SL-RSRP are acquired.

In step S52, according to the SD-RSRP and the SL-RSRP, it is determined that an entry condition is satisfied; and in response to that a duration of the entry condition being satisfied exceeds a first time threshold, a cell where the entry condition is satisfied is recorded, and it is determined to send the measurement report to the base station. A first offset value, a second offset value, a first threshold value and a second threshold value are determined. According to the first offset value, the second offset value, the first threshold value, the second threshold value, the SD-RSRP and the SL-RSRP, it is determined that the entry condition is satisfied.

In embodiments of the present disclosure, the first offset value, the second offset value, the first threshold value and the second threshold value may be set as required, which is not specifically limited by the embodiments of the present disclosure.

In some embodiments, determining that the entry condition is satisfied according to the first offset value, the second offset value, the first threshold value, the second threshold value, the SD-RSRP and the SL-RSRP includes: determining that the entry condition is satisfied, in case that the SL-RSRP plus the first offset value is less than the first threshold value or the SD-RSRP plus the second offset value is less than the second threshold value.

For example, in case that Mr+Hys<Thresh1, or MrD+HysD<Thresh1D, it is determined that the entry condition is satisfied. Mr is the SL-RSRP, Hys is the first offset value, Thresh 1 is the first threshold value, MrD is the SD-RSRP, HysD is the second offset value, and Thresh1D is the second threshold value.

In some other embodiments, determining that the entry condition is satisfied according to the first offset value, the second offset value, the first threshold value, the second threshold value, the SD-RSRP and the SL-RSRP includes: determining that the entry condition is satisfied, in case that the SL-RSRP plus the first offset value is greater than the first threshold value or the SD-RSRP plus the second offset value is greater than the second threshold value.

For example, in case that Mr+Hys>Thresh1, or MrD+HysD>Thresh1D, it is determined that the entry condition is satisfied. Mr is the SL-RSRP, Hys is the first offset value, Thresh 1 is the first threshold value, MrD is the SD-RSRP, HysD is the second offset value, and Thresh1D is the second threshold value.

In some embodiments, determining the first offset value, the second offset value, the first threshold value and the second threshold value includes: receiving a sidelink radio resource control (RRC) message of a second terminal; and according to the sidelink RRC message, determining the first offset value, the second offset value, the first threshold value and the second threshold value.

In some other embodiments, determining the first offset value, the second offset value, the first threshold value and the second threshold value includes: receiving a RRC message of a base station; and according to the RRC message, determining the first offset value, the second offset value, the first threshold value and the second threshold value.

In still some other embodiments, the second offset value and the second threshold value are determined according to a resource pool for transmitting a discovery signal.

In some embodiments, there are a plurality of resource pools available for transmitting the discovery signal, and each resource pool corresponds to one second threshold value.

In some embodiments, the second offset value and the second threshold value are not configured, and it is determined that the second offset value is equal to the first offset value, and/or the second threshold value is equal to the first threshold value.

In still some other embodiments, the second threshold value is not configured, the first threshold value and a fourth offset value are determined, and the second threshold value is determined as a sum of the first threshold value and the fourth offset value.

In some embodiments, the measurement report includes the cell or the first terminal where the entry condition is satisfied.

In some embodiments, the measurement report carries the SD-RSRP, the SL-RSRP and a first channel measurement result.

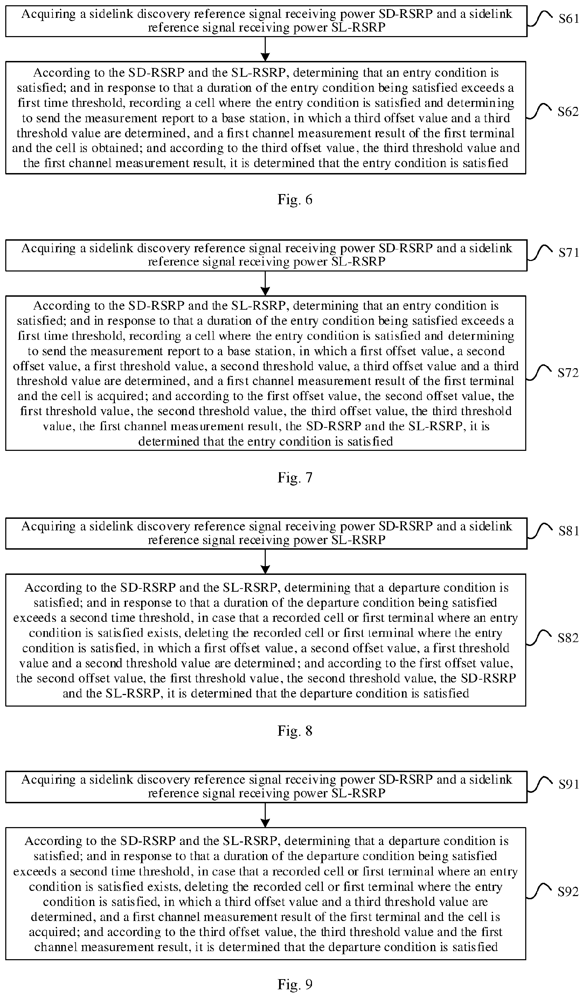

Referring to Fig. 6, Fig. 6 is a flow chart of another method for reporting a measurement report according to an embodiment of the present disclosure.

As shown in Fig. 6, the method is applied to a first terminal, and the method may include, but is not limited to, the following steps.

In step S61, a sidelink discovery reference signal receiving power SD-RSRP and a sidelink reference signal receiving power SL-RSRP are acquired.

In step S62, according to the SD-RSRP and the SL-RSRP, it is determined that an entry condition is satisfied; and in response to that a duration of the entry condition being satisfied exceeds a first time threshold, a cell where the entry condition is satisfied is recorded and it is determined to send the measurement report to a base station. A third offset value and a third threshold value are determined, and a first channel measurement result of the first terminal and the cell is obtained. According to the third offset value, the third threshold value and the first channel measurement result, it is determined that the entry condition is satisfied.

In embodiments of the present disclosure, the third offset value and the third threshold value may be set as required, which is not specifically limited by the embodiments of the present disclosure.

In embodiments of the present disclosure, the first channel measurement result may be a reference signal receiving power (RSRP).

In some embodiments, determining that the entry condition is satisfied according to the third offset value, the third threshold value and the first channel measurement result includes: determining that the entry condition is satisfied, in case that the first channel measurement result plus the third offset value is greater than the third threshold value.

For example, Mn+Ofh+Ocn>Thresh2. Mn is the first channel measurement result, Ofn+Ocn is the third offset value, and Thresh2 is the third threshold value.

In some other embodiments, determining that the entry condition is satisfied according to the third offset value, the third threshold value and the first channel measurement result includes: determining that the entry condition is satisfied, in case that the first channel measurement result plus the third offset value is less than the third threshold value.

For example, Mn+Ofh+Ocn<Thresh2. Mn is the first channel measurement result, Ofn+Ocn is the third offset value, and Thresh2 is the third threshold value.

In some embodiments, determining the third offset value and the third threshold value includes: receiving a sidelink radio resource control RRC message of a second terminal; and according to the sidelink RRC message, determining the third offset value and the third threshold value.

In some other embodiments, determining the third offset value and the third threshold value includes: receiving a RRC message of a base station; and according to the RRC message, determining the third offset value and the third threshold value.

Referring to Fig. 7, Fig. 7 is a flow chart of another method for reporting a measurement report according to an embodiment of the present disclosure.

As shown in Fig. 7, the method is applied to a first terminal, and the method may include, but is not limited to, the following steps.

In step S71, a sidelink discovery reference signal receiving power SD-RSRP and a sidelink reference signal receiving power SL-RSRP are acquired.

In step S72, according to the SD-RSRP and the SL-RSRP, it is determined that an entry condition is satisfied; and in response to that a duration of the entry condition being satisfied exceeds a first time threshold, a cell where the entry condition is satisfied is recorded and it is determined to send the measurement report to a base station. A first offset value, a second offset value, a first threshold value, a second threshold value, a third offset value and a third threshold value are determined, and a first channel measurement result of the first terminal and the cell is acquired. According to the first offset value, the second offset value, the first threshold value, the second threshold value, the third offset value, the third threshold value, the first channel measurement result, the SD-RSRP and the SL-RSRP, it is determined that the entry condition is satisfied.

In embodiments of the present disclosure, the first offset value, the second offset value, the first threshold value, the second threshold value, the third offset value and the third threshold value may be set as required, which is not specifically limited by the embodiments of the present disclosure.

In some embodiments, determining that the entry condition is satisfied according to the first offset value, the second offset value, the first threshold value, the second threshold value, the third offset value, the third threshold value, the first channel measurement result, the SD-RSRP and the SL-RSRP includes: determining that the entry condition is satisfied, in case that the SL-RSRP plus the first offset value is less than the first threshold value or the SD-RSRP plus the second offset value is less than the second threshold value, and the first channel measurement result plus the third offset value is greater than the third threshold value.

For example, in case that Mr+Hys<Thresh1, or MrD+HysD<Thresh1D, and Mn+Ofn+Ocn>Thresh2, it is determined that the entry condition is satisfied. Mr is the SL-RSRP, Hys is the first offset value, Thresh 1 is the first threshold value, MrD is the SD-RSRP, HysD is the second offset value, ThreshID is the second threshold value, Mn is the first channel measurement result, Ofn+Ocn is the third offset value, and Thresh2 is the third threshold value.

In some other embodiments, determining that the entry condition is satisfied according to the first offset value, the second offset value, the first threshold value, the second threshold value, the third offset value, the third threshold value, the first channel measurement result, the SD-RSRP and the SL-RSRP includes: determining that the entry condition is satisfied, in case that the SL-RSRP plus the first offset value is greater than the first threshold value or the SD-RSRP plus the second offset value is greater than the second threshold value, and the first channel measurement result plus the third offset value is less than the third threshold value.

For example, in case that Mr+Hys>Thresh1, or MrD+HysD>Thresh1D, and Mn+Ofn+Ocn<Thresh2, it is determined that the entry condition is satisfied. Mr is the SL-RSRP, Hys is the first offset value, Thresh 1 is the first threshold value, MrD is the SD-RSRP, HysD is the second offset value, ThreshID is the second threshold value, Mn is the first channel measurement result, Ofn+Ocn is the third offset value, and Thresh2 is the third threshold value.

In some embodiments, determining the first offset value, the second offset value, the first threshold value, the second threshold value, the third offset value and the third threshold value includes: receiving a sidelink radio resource control RRC message of a second terminal; and according to the sidelink RRC message, determining the first offset value, the second offset value, the first threshold value, the second threshold value, the third offset value and the third threshold value.

In some other embodiments, determining the first offset value, the second offset value, the first threshold value, the second threshold value, the third offset value and the third threshold value includes: receiving a RRC message of a base station; and according to the RRC message, determining the first offset value, the second offset value, the first threshold value, the second threshold value, the third offset value and the third threshold value.

In still some other embodiments, the second offset value and the second threshold value are determined according to a resource pool for transmitting a discovery signal.

In some embodiments, there are a plurality of resource pools available for transmitting the discovery signal, and each resource pool corresponds to one second threshold value.

In some embodiments, the second offset value and the second threshold value are not configured, and it is determined that the second offset value is equal to the first offset value, and/or the second threshold value is equal to the first threshold value.

In still some other embodiments, the second threshold value is not configured, the first threshold value and a fourth offset value are determined, and the second threshold value is determined as a sum of the first threshold value and the fourth offset value.

In some embodiments, the measurement report includes the cell or the first terminal where the entry condition is satisfied.

In some embodiments, the measurement report carries the SD-RSRP, the SL-RSRP and the first channel measurement result.

Referring to Fig. 8, Fig. 8 is a flow chart of another method for reporting a measurement report according to an embodiment of the present disclosure.

As shown in Fig. 8, the method is applied to a first terminal, and the method may include, but is not limited to, the following steps.

In step S81, a sidelink discovery reference signal receiving power SD-RSRP and a sidelink reference signal receiving power SL-RSRP are acquired.

In step S82, according to the SD-RSRP and the SL-RSRP, it is determined that a departure condition is satisfied; and in response to that a duration of the departure condition being satisfied exceeds a second time threshold, in case that a recorded cell or first terminal where an entry condition is satisfied exists, the recorded cell or first terminal where the entry condition is satisfied is deleted. A first offset value, a second offset value, a first threshold value and a second threshold value are determined. According to the first offset value, the second offset value, the first threshold value, the second threshold value, the SD-RSRP and the SL-RSRP, it is determined that the departure condition is satisfied.

In embodiments of the present disclosure, the first offset value, the second offset value, the first threshold value and the second threshold value may be set as required, which is not specifically limited by the embodiments of the present disclosure.

In some embodiments, determining that the departure condition is satisfied according to the first offset value, the second offset value, the first threshold value, the second threshold value, the SD-RSRP and the SL-RSRP includes: determining that the departure condition is satisfied, in case that the SL-RSRP minus the first offset value is greater than the first threshold value or the SD-RSRP minus the second offset value is greater than the second threshold value.

In some other embodiments, determining that the departure condition is satisfied according to the first offset value, the second offset value, the first threshold value, the second threshold value, the SD-RSRP and the SL-RSRP includes: determining that the departure condition is satisfied, in case that the SL-RSRP minus the first offset value is less than the first threshold value or the SD-RSRP minus the second offset value is less than the second threshold value.

In some embodiments, determining the first offset value, the second offset value, the first threshold value and the second threshold value includes: receiving a sidelink radio resource control RRC message of a second terminal; and according to the sidelink RRC message, determining the first offset value, the second offset value, the first threshold value and the second threshold value.

In some other embodiments, determining the first offset value, the second offset value, the first threshold value and the second threshold value includes: receiving a RRC message of a base station; and according to the RRC message, determining the first offset value, the second offset value, the first threshold value and the second threshold value.

In still some other embodiments, the second offset value and the second threshold value are determined according to a resource pool for transmitting a discovery signal.

In some embodiments, there are a plurality of resource pools available for transmitting the discovery signal, and each resource pool corresponds to one second threshold value.

In some embodiments, the second offset value and the second threshold value are not configured, and it is determined that the second offset value is equal to the first offset value, and/or the second threshold value is equal to the first threshold value.

In still some other embodiments, the second threshold value is not configured, the first threshold value and a fourth offset value are determined, and the second threshold value is determined as a sum of the first threshold value and the fourth offset value.

Referring to Fig. 9, Fig. 9 is a flow chart of another method for reporting a measurement report according to an embodiment of the present disclosure.

As shown in Fig. 9, the method is applied to a first terminal, and the method may include, but is not limited to, the following steps.

In step S91, a sidelink discovery reference signal receiving power SD-RSRP and a sidelink reference signal receiving power SL-RSRP are acquired.

In step S92, according to the SD-RSRP and the SL-RSRP, it is determined that a departure condition is satisfied; and in response to that a duration of the departure condition being satisfied exceeds a second time threshold, in case that a recorded cell or first terminal where an entry condition is satisfied exists, the recorded cell or first terminal where the entry condition is satisfied is deleted. A third offset value and a third threshold value are determined, and a first channel measurement result of the first terminal and the cell is acquired. According to the third offset value, the third threshold value and the first channel measurement result, it is determined that the departure condition is satisfied.

In embodiments of the present disclosure, the third offset value and the third threshold value may be set as required, which is not specifically limited by the embodiments of the present disclosure.

In some embodiments, determining that the entry condition is satisfied according to the third offset value, the third threshold value and the first channel measurement result includes: determining that the departure condition is satisfied, in case that the first channel measurement result minus the third offset value is less than the third threshold value.

In some other embodiments, determining that the entry condition is satisfied according to the third offset value, the third threshold value and the first channel measurement result includes: determining that the departure condition is satisfied, in case that the first channel measurement result minus the third offset value is greater than the third threshold value.

In some embodiments, determining the third offset value and the third threshold value includes: receiving a sidelink radio resource control RRC message of a second terminal; and according to the sidelink RRC message, determining the third offset value and the third threshold value.

In some other embodiments, determining the third offset value and the third threshold value includes: receiving a RRC message of a base station; and according to the RRC message, determining the third offset value and the third threshold value.

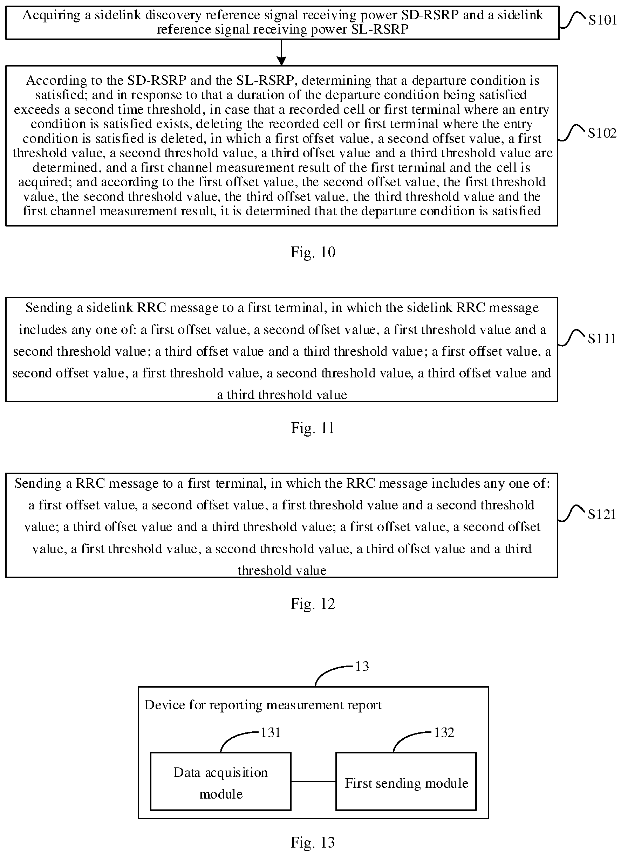

Referring to Fig. 10, Fig. 10 is a flow chart of another method for reporting a measurement report according to an embodiment of the present disclosure.

As shown in Fig. 10, the method is applied to a first terminal, and the method may include, but is not limited to, the following steps.

In step S101, a sidelink discovery reference signal receiving power SD-RSRP and a sidelink reference signal receiving power SL-RSRP are acquired.

In step S 102, according to the SD-RSRP and the SL-RSRP, it is determined that a departure condition is satisfied; and in response to that a duration of the departure condition being satisfied exceeds a second time threshold, in case that a recorded cell or first terminal where an entry condition is satisfied exists, the recorded cell or first terminal where the entry condition is satisfied is deleted. A first offset value, a second offset value, a first threshold value, a second threshold value, a third offset value and a third threshold value are determined, and a first channel measurement result of the first terminal and the cell is acquired. According to the first offset value, the second offset value, the first threshold value, the second threshold value, the third offset value, the third threshold value and the first channel measurement result, it is determined that the departure condition is satisfied.

In embodiments of the present disclosure, the first offset value, the second offset value, the first threshold value, the second threshold value, the third offset value and the third threshold value may be set as required, which is not specifically limited by the embodiments of the present disclosure.

In some embodiments, determining that the entry condition is satisfied according to the first offset value, the second offset value, the first threshold value, the second threshold value, the third offset value, the third threshold value and the first channel measurement result includes: determining that the departure condition is satisfied, in case that the SL-RSRP minus the first offset value is greater than the first threshold value or the SD-RSRP minus the second offset value is greater than the second threshold value, and the first channel measurement result minus the third offset value is less than the third threshold value.

In some other embodiments, determining that the entry condition is satisfied according to the first offset value, the second offset value, the first threshold value, the second threshold value, the third offset value, the third threshold value and the first channel measurement result includes: determining that the departure condition is satisfied, in case that the SL-RSRP minus the first offset value is less than the first threshold value or the SD-RSRP minus the second offset value is less than the second threshold value, and the first channel measurement result minus the third offset value is greater than the third threshold value.

In some embodiments, determining the first offset value, the second offset value, the first threshold value, the second threshold value, the third offset value and the third threshold value includes: receiving a sidelink radio resource control RRC message of a second terminal; and according to the sidelink RRC message, determining the first offset value, the second offset value, the first threshold value, the second threshold value, the third offset value and the third threshold value.

In some other embodiments, determining the first offset value, the second offset value, the first threshold value, the second threshold value, the third offset value and the third threshold value includes: receiving a RRC message of a base station; and according to the RRC message, determining the first offset value, the second offset value, the first threshold value, the second threshold value, the third offset value and the third threshold value.

In still some other embodiments, the second offset value and the second threshold value are determined according to a resource pool for transmitting a discovery signal.

In some embodiments, there are a plurality of resource pools available for transmitting the discovery signal, and each resource pool corresponds to one second threshold value.

In some embodiments, the second offset value and the second threshold value are not configured, and it is determined that the second offset value is equal to the first offset value, and/or the second threshold value is equal to the first threshold value.

In still some other embodiments, the second threshold value is not configured, the first threshold value and a fourth offset value are determined, and the second threshold value is determined as a sum of the first threshold value and the fourth offset value.

Referring to Fig. 11, Fig. 11 is a flow chart of another method for reporting a measurement report according to an embodiment of the present disclosure.

As shown in Fig. 11, the method is applied to a second terminal, and the method may include, but is not limited to, the following steps.

In step S111, a sidelink RRC message is sent to a first terminal. The sidelink RRC message includes any one of: a first offset value, a second offset value, a first threshold value and a second threshold value; a third offset value and a third threshold value; a first offset value, a second offset value, a first threshold value, a second threshold value, a third offset value and a third threshold value.

In embodiments of the present disclosure, the second terminal may be a relay terminal.

In some embodiments, the second offset value is determined according to a difference value between the SD-RSRP and the SL-RSRP.

In embodiments of the present disclosure, the first terminal receives the sidelink RRC message sent by the second terminal, and acquires the corresponding information. In case that the SD-RSRP and the SL-RSRP are acquired, it can be determined to send the measurement report to the base station according to both the SD-RSRP and the SL-RSRP, so as to avoid the problem that the trigger timing of reporting is different, i.e., the measurement report will be reported too early or too late, when evaluating whether to report the measurement report to the base station according to the SL-RSRP or the SD-RSRP. Thus, when the SL-RSRP or the SD-RSRP is used to evaluate whether to report the measurement report to the base station, the timing of reporting is consistent, so as to report the measurement report accurately.

Referring to Fig. 12, Fig. 12 is a flow chart of another method for reporting a measurement report according to an embodiment of the present disclosure.

As shown in Fig. 12, the method is applied to a base station, and the method may include, but is not limited to, the following steps.

In step S121, a RRC message is sent to a first terminal. The RRC message includes any one of: a first offset value, a second offset value, a first threshold value and a second threshold value; a third offset value and a third threshold value; a first offset value, a second offset value, a first threshold value, a second threshold value, a third offset value and a third threshold value.

In embodiments of the present disclosure, the first terminal receives the RRC message sent by the base station and acquires the corresponding information. In case that the SD-RSRP and the SL-RSRP are acquired, it can be determined to send the measurement report to the base station according to both the SD-RSRP and the SL-RSRP, so as to avoid the problem that the trigger timing of reporting is different, i.e., the measurement report will be reported too early or too late, when evaluating whether to report the measurement report to the base station according to the SL-RSRP or the SD-RSRP. Thus, when the SL-RSRP or the SD-RSRP is used to evaluate whether to report the measurement report to the base station, the timing of reporting is consistent, so as to report the measurement report accurately.

In the above embodiments according to the present disclosure, the methods according to the embodiments of the present disclosure are introduced from the perspectives of the base station, the first terminal and the second terminal, respectively. In order to realize the functions in the methods according to the embodiments of the present disclosure, the base station and the first terminal may include hardware structures and software modules, and realize the above functions in the form of hardware structures, software modules, or hardware structures plus software modules. A certain one of the above functions may be implemented by means of hardware structures, software modules, or hardware structures plus software modules.

Referring to Fig. 13, Fig. 13 is a structural diagram of a device 13 for reporting a measurement report according to an embodiment of the present disclosure.

As shown in Fig. 13, the device 13 for reporting the measurement report according to this embodiment of the present disclosure includes a data acquisition module 131 and a first sending module 132.

The data acquisition module 131 is configured to acquire a SD-RSRP and a SL-RSRP.

The first sending module 132 is configured to determine to send the measurement report to a base station according to the SD-RSRP and the SL-RSRP.

In some embodiments, the first sending module 132 is specifically configured to: determine that an entry condition is satisfied according to the SD-RSRP and the SL-RSRP; and in response to that a duration of the entry condition being satisfied exceeds a first time threshold, record a cell where the entry condition is satisfied, and determine to send the measurement report to the base station.

In some embodiments, the first sending module 132 is further configured to: determine a first offset value, a second offset value, a first threshold value and a second threshold value; and according to the first offset value, the second offset value, the first threshold value, the second threshold value, the SD-RSRP and the SL-RSRP, determine that the entry condition is satisfied.

In some embodiments, the first sending module 132 is further configured to determine that the entry condition is satisfied, in case that the SL-RSRP plus the first offset value is less than the first threshold value or the SD-RSRP plus the second offset value is less than the second threshold value.

In some other embodiments, the first sending module 132 is further configured to determine that the entry condition is satisfied, in case that the SL-RSRP plus the first offset value is greater than the first threshold value or the SD-RSRP plus the second offset value is greater than the second threshold value.

In some embodiments, the first sending module 132 is further configured to: receive a sidelink radio resource control RRC message of a second terminal; and according to the sidelink RRC message, determine the first offset value, the second offset value, the first threshold value and the second threshold value.

In some other embodiments, the first sending module 132 is further configured to: receive a RRC message of a base station; and according to the RRC message, determine the first offset value, the second offset value, the first threshold value and the second threshold value.

In some embodiments, the first sending module 132 is further configured to determine the second offset value and the second threshold value according to a resource pool for transmitting a discovery signal.

In some embodiments, there are a plurality of resource pools available for transmitting the discovery signal, and each resource pool corresponds to one second threshold value.

In some embodiments, the first sending module 132 is further configured to determine that the second offset value is equal to the first offset value and/or that the second threshold value is equal to the first threshold value.

In some embodiments, the first sending module 132 is further configured to determine the first threshold value and a fourth offset value, and determine that the second threshold value is a sum of the first threshold value and the fourth offset value.

In some other embodiments, the first sending module 132 is specifically configured to: determine a third offset value and a third threshold value, and acquire a first channel measurement result of the first terminal and the cell; and according to the third offset value, the third threshold value and the first channel measurement result, determine that the entry condition is satisfied.

In some embodiments, the first sending module 132 is further configured to determine that the entry condition is satisfied, in case that the first channel measurement result plus the third offset value is greater than the third threshold value.

In some other embodiments, the first sending module 132 is further configured to determine that the entry condition is satisfied, in case that the first channel measurement result plus the third offset value is less than the third threshold value.

In some embodiments, the first sending module 132 is further configured to: receive the sidelink radio resource control RRC message of the second terminal; and according to the sidelink RRC message, determine the third offset value and the third threshold value.

In some other embodiments, the first sending module 132 is further configured to: receive the RRC message of the base station; and according to the RRC message, determine the third offset value and the third threshold value.

In still some other embodiments, the first sending module 132 is specifically configured to: determine the first offset value, the second offset value, the first threshold value, the second threshold value, the third offset value and the third threshold value, and acquire the first channel measurement result of the first terminal and the cell; and according to the first offset value, the second offset value, the first threshold value, the second threshold value, the third offset value, the third threshold value, the first channel measurement result, the SD-RSRP and the SL-RSRP, determine that the entry condition is satisfied.

In some embodiments, the first sending module 132 is further configured to determine that the entry condition is satisfied, in case that the SL-RSRP plus the first offset value is less than the first threshold value or the SD-RSRP plus the second offset value is less than the second threshold value, and the first channel measurement result plus the third offset value is greater than the third threshold value.

In some other embodiments, the first sending module 132 is further configured to determine that the entry condition is satisfied, in case that the SL-RSRP plus the first offset value is greater than the first threshold value or the SD-RSRP plus the second offset value is greater than the second threshold value, and the first channel measurement result plus the third offset value is less than the third threshold value.

In some embodiments, the first sending module 132 is further configured to: receive the sidelink radio resource control RRC message of the second terminal; and according to the sidelink RRC message, determine the first offset value, the second offset value, the first threshold value, the second threshold value, the third offset value and the third threshold value.

In some other embodiments, the first sending module 132 is further configured to: receive the RRC message of the base station; and according to the RRC message, determine the first offset value, the second offset value, the first threshold value, the second threshold value, the third offset value and the third threshold value.

In some embodiments, the first sending module 132 is further configured to determine the second offset value and the second threshold value according to a resource pool for transmitting a discovery signal.

In some embodiments, there are a plurality of resource pools available for transmitting the discovery signal, and each resource pool corresponds to one second threshold value.

In some embodiments, the first sending module 132 is further configured to determine that the second offset value is equal to the first offset value and/or that the second threshold value is equal to the first threshold value.

In some embodiments, the first sending module 132 is further configured to determine the first threshold value and a fourth offset value, and determine that the second threshold value is a sum of the first threshold value and the fourth offset value.

In some embodiments, the measurement report includes the cell or the first terminal where the entry condition is satisfied.

In some embodiments, the measurement report carries the SD-RSRP, the SL-RSRP and the first channel measurement result.

In some other embodiments, the first sending module 132 is specifically configured to: determine that a departure condition is satisfied according to the SD-RSRP and the SL-RSRP; and in response to that a duration of the departure condition being satisfied exceeds a second time threshold, in case that a recorded cell or first terminal where the entry condition is satisfied exists, the recorded cell or first terminal where the entry condition is satisfied is deleted.

In some embodiments, the first sending module 132 is further configured to: determine a first offset value, a second offset value, a first threshold value and a second threshold value; and according to the first offset value, the second offset value, the first threshold value, the second threshold value, the SD-RSRP and the SL-RSRP, determine that the departure condition is satisfied.

In some embodiments, the first sending module 132 is further configured to determine that the departure condition is satisfied, in case that the SL-RSRP minus the first offset value is greater than the first threshold value or the SD-RSRP minus the second offset value is greater than the second threshold value.

In some embodiments, the first sending module 132 is further configured to determine that the departure condition is satisfied, in case that the SL-RSRP minus the first offset value is less than the first threshold value or the SD-RSRP minus the second offset value is less than the second threshold value.

In some embodiments, the first sending module 132 is further configured to: receive the sidelink radio resource control RRC message of the second terminal; and according to the sidelink RRC message, determine the first offset value, the second offset value, the first threshold value and the second threshold value.

In some embodiments, the first sending module 132 is further configured to: receive the RRC message from the base station; and according to the RRC message, determine the first offset value, the second offset value, the first threshold value and the second threshold value.

In some embodiments, the first sending module 132 is further configured to determine the second offset value and the second threshold value according to a resource pool for transmitting a discovery signal.

In some embodiments, there are a plurality of resource pools available for transmitting the discovery signal, and each resource pool corresponds to one second threshold value.

In some embodiments, the first sending module 132 is further configured to determine that the second offset value is equal to the first offset value and/or that the second threshold value is equal to the first threshold value.

In some embodiments, the first sending module 132 is further configured to determine the first threshold value and a fourth offset value, and determine that the second threshold value is a sum of the first threshold value and the fourth offset value.

In some embodiments, the first sending module 132 is further configured to: determine a third offset value and a third threshold value, and acquire a first channel measurement result of the first terminal and the cell; and according to the third offset value, the third threshold value and the first channel measurement result, determine that the departure condition is satisfied.

In some embodiments, the first sending module 132 is further configured to determine that the departure condition is satisfied, in case that the first channel measurement result minus the third offset value is less than the third threshold value.

In some embodiments, the first sending module 132 is further configured to determine that the departure condition is satisfied, in case that the first channel measurement result minus the third offset value is greater than the third threshold value.

In some embodiments, the first sending module 132 is further configured to: receive the sidelink radio resource control RRC message of the second terminal; and according to the sidelink RRC message, determine the third offset value and the third threshold value.

In some embodiments, the first sending module 132 is further configured to: receive the RRC message from the base station; and according to the RRC message, determine the third offset value and the third threshold value.

In some embodiments, the first sending module 132 is further configured to: determine the first offset value, the second offset value, the first threshold value, the second threshold value, the third offset value and the third threshold value, and acquire the first channel measurement result of the first terminal and the cell; and according to the first offset value, the second offset value, the first threshold value, the second threshold value, the third offset value, the third threshold value and the first channel measurement result, determine that the departure condition is satisfied.

In some embodiments, the first sending module 132 is further configured to determine that the departure condition is satisfied, in case that the SL-RSRP minus the first offset value is greater than the first threshold value or the SD-RSRP minus the second offset value is greater than the second threshold value, and the first channel measurement result minus the third offset value is less than the third threshold value.

In some embodiments, the first sending module 132 is further configured to determine that the departure condition is satisfied, in case that the SL-RSRP minus the first offset value is less than the first threshold value or the SD-RSRP minus the second offset value is less than the second threshold value, and the first channel measurement result minus the third offset value is greater than the third threshold value.

In some embodiments, the first sending module 132 is further configured to receive the sidelink radio resource control RRC message of the second terminal; and according to the sidelink RRC message, determine the first offset value, the second offset value, the first threshold value, the second threshold value, the third offset value and the third threshold value.

In some embodiments, the first sending module 132 is further configured to receive: the RRC message from the base station; and according to the RRC message, determine the first offset value, the second offset value, the first threshold value, the second threshold value, the third offset value and the third threshold value.

In some embodiments, the first sending module 132 is further configured to determine the second offset value and the second threshold value according to a resource pool for transmitting a discovery signal.

In some embodiments, there are a plurality of resource pools available for transmitting the discovery signal, and each resource pool corresponds to one second threshold value.

In some embodiments, the first sending module 132 is further configured to determine that the second offset value is equal to the first offset value and/or that the second threshold value is equal to the first threshold value.

In some embodiments, the first sending module 132 is further configured to determine the first threshold value and a fourth offset value, and determine that the second threshold value is a sum of the first threshold value and the fourth offset value.

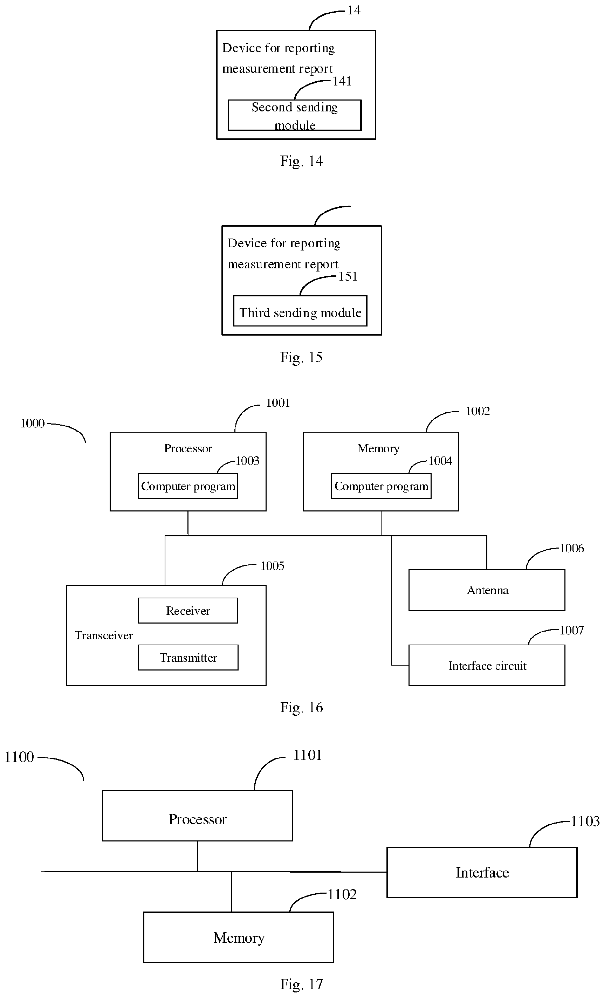

Referring to Fig. 14, Fig. 14 is a structural diagram of a device 14 for reporting a measurement report according to an embodiment of the present disclosure.

As shown in Fig. 14, the device 14 for reporting the measurement report according to this embodiment of the present disclosure includes a second sending module 141.

The second sending module 141 is configured to send a sidelink RRC message to the first terminal. The sidelink RRC message includes any one of: a first offset value, a second offset value, a first threshold value and a second threshold value; a third offset value and a third threshold value; a first offset value, a second offset value, a first threshold value, a second threshold value, a third offset value and a third threshold value.

In some embodiments, the second sending module 141 is further configured to determine the second offset value according to a difference value between the SD-RSRP and the SL-RSRP.

Referring to Fig. 15, Fig. 15 is a structural diagram of a device 15 for reporting a measurement report according to an embodiment of the present disclosure.

As shown in Fig. 15, the device 15 for reporting the measurement report according to this embodiment of the present disclosure includes a third sending module 151.

The third sending module 151 is configured to send a RRC message to the first terminal. The RRC message includes any one of: a first offset value, a second offset value, a first threshold value and a second threshold value; a third offset value and a third threshold value; a first offset value, a second offset value, a first threshold value, a second threshold value, a third offset value and a third threshold value.

With regard to the devices for reporting the measurement report in the above embodiments, the specific way in which each module performs the operation has been described in detail in the embodiments of the methods, and will not be described in detail here.

The device for reporting the measurement report according to the above embodiments of the present disclosure has the same or similar beneficial effects as the method for reporting the measurement report according to some of the above embodiments, and will not be repeated here.

Referring to Fig. 16, Fig. 16 is a schematic structural diagram of a communication device 1000 according to an embodiment of the present disclosure. The communication device 1000 may be a base station, a first terminal, or a second terminal, may also be a chip, a chip system, or a processor that supports the base station to realize the above method, or may also be a chip, a chip system, or a processor that supports the terminal to realize the above method. The communication device 1000 may be used to implement the methods described in the above method embodiments, and for details, reference can be made to the descriptions in the above method embodiments.

The communication device 1000 may be a network-side device, a terminal equipment, may also be a chip, a chip system, or a processor that supports the network-side device to realize the above method, or may also be a chip, a chip system, or a processor that supports the terminal equipment to realize the above method. The device may be used to realize the methods described in the above method embodiments, and for details, reference can be made to the descriptions in the above method embodiments.

The communication device 1000 may include one or more processors 1001. The processor 1001 may be a general-purpose processor or a special-purpose processor or the like, for example, a baseband processor or a central processing unit. The baseband processor may be used to process communication protocols and communication data, and the central processor may be used to control communication devices (such as base stations, baseband chips, terminal equipment, terminal equipment chips, DUs or CUs, etc.), execute computer programs, and process data of computer programs.

Optionally, the communication device 1000 may further include one or more memories 1002, on which a computer program 1004 may be stored, and the memory 1002 executes the computer program 1004, so that the communication device 1000 can execute the methods described in the above method embodiments. Optionally, data can also be stored in the memory 1002. The communication device 1000 and the memory 1002 can be set separately or integrated together.

Optionally, the communication device 1000 may further include a transceiver 1005 and an antenna 1006. The transceiver 1005 may be called a transceiving unit, a transceiving machine, a transceiver circuit, etc., and is used to realize the transceiving function. The transceiver 1005 may include a receiver and a transmitter. The receiver may be called a receiving machine or a receiving circuit, etc., to realize the receiving function. The transmitter may be called a transmitting machine or a transmitting circuit, etc., and is used to realize the transmitting function.

Optionally, the communication device 1000 may further include one or more interface circuits 1007. The interface circuit 1007 is used to receive code instructions and transmit them to the processor 1001. The processor 1001 executes the code instructions to cause the communication device 1000 to perform the methods described in the above method embodiments.

The communication device 1000 is the first terminal, and the processor 1001 is used to execute: steps S21 and S22 in Fig. 2; steps S31 and S32 in Fig. 3; steps S41 and S42 in Fig. 4; steps S51 and S52 in Fig. 5; steps S61 and S62 in Fig. 6; steps S71 and S72 in Fig. 7; steps S81 and S82 in Fig. 8; steps S91 and S92 in Fig. 9; steps S101 and S102 in Fig. 10.

The communication device 1000 is the second terminal, and the processor 1001 is used to execute step S111 in Fig. 11.

The communication device 1000 is the base station, and the processor 1001 is used to execute step S121 in Fig. 12.

In an implementation, the processor 1001 may include a transceiver for receiving and transmitting functions. For example, the transceiver may be a transceiving circuit, or an interface, or an interface circuit. The transceiving circuits, interfaces or interface circuits for receiving and transmitting functions can be separated or integrated. The above transceiving circuits, interfaces or interface circuits may be used for reading and writing codes/data, or the above transceiving circuits, interfaces or interface circuits may be used for signal transmission or transfer.

In an implementation, the processor 1001 may store a computer program 1003, and the computer program 1003 runs on the processor 1001 to enable the communication device 1000 to execute the methods described in the above method embodiments. The computer program 1003 may be solidified in the processor 1001, in which case the processor 1001 may be implemented by hardware.

In an implementation, the communication device 1000 may include a circuit, which may realize the function of transmitting or receiving or communicating in the aforementioned method embodiments. The processor and transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, or the like. The processor and transceiver may also be manufactured by various IC process technologies, such as complementary metal oxide semiconductor (CMOS), N-channel metal oxide semiconductor (NMOS), P-channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be a terminal equipment (such as the terminal equipment in the aforementioned method embodiments), but the scope of the communication device described in the present disclosure is not limited to this, and the structure of the communication device may not be limited by Fig. 16. The communication device may be a stand-alone device or may be part of a large device. For example, the communication device may be: (1) an independent integrated circuit IC, or a chip, or a chip system or subsystem; (2) a set with one or more ICs, optionally, the IC set may also include storage components for storing data and computer programs; (3) ASIC, such as a modem; (4) a module that may be embedded in another device; (5) a receiver, a terminal equipment, an intelligent terminal equipment, a cellular phone, a wireless device, a handset, a mobile unit, a vehicle-mounted device, a base station, a cloud device, an artificial intelligence device, etc.; (6) others and so on.

In the case that the communication device may be a chip or a chip system, referring to Fig. 17, Fig. 17 is a structural diagram of a chip according to an embodiment of the present disclosure.

A chip 1100 includes a processor 1101 and an interface 1103. One or more processors 1101 may be provided, and a plurality of interfaces 1103 may be provided.

In the case that the chip is used to realize the function of the terminal equipment in the embodiments of the present disclosure, the interface 1103 is used to receive code instructions and transmit them to the processor, and the processor 1101 is used to run the code instructions to execute the method for reporting the measurement report as described in some embodiments above.

In the case that the chip is used to realize the function of the network-side device in the embodiments of the present disclosure, the interface 1103 is used to receive code instructions and transmit them to the processor, and the processor 1101 is used to run the code instructions to execute the method for reporting the measurement report as described in some embodiments above.

Optionally, the chip 1100 further includes a memory 1102 for storing necessary computer programs and data.

Those skilled in the art can also understand that various illustrative logical blocks and steps listed in the embodiments of the present disclosure may be implemented by electronic hardware, computer software, or a combination of both. Whether this function is realized by hardware or software depends on the specific application and the design requirements of the whole system. Those skilled in the art can use various methods to realize the described functions for each specific application, but this realization should not be understood as beyond the scope of protection of the embodiments of the present disclosure.

The present disclosure also provides a readable storage medium on which instructions are stored, which, when executed by a computer, realize the function of any of the above method embodiments.

The present disclosure also provides a computer program product which, when executed by a computer, realizes the function of any of the above method embodiments.

The above embodiments can be realized in whole or in part by software, hardware, firmware or any combination thereof. When implemented by software, they can be wholly or partially implemented in the form of computer program products. The computer program product includes one or more computer programs. When the computer program is loaded and executed on a computer, the flow or function according to the embodiments of the present disclosure is generated in whole or in part. The computer may be a general-purpose computer, a special-purpose computer, a computer network, or other programmable devices. The computer program may be stored in a computer-readable storage medium or transmitted from one computer-readable storage medium to another computer-readable storage medium. For example, the computer program may be transmitted from a website, computer, server or data center to another website, computer server or data center in a wired (such as a coaxial cable, an optical fiber, a digital subscriber line (DSL)) or wireless (such as infrared, wireless, microwave, etc.) manner. The computer-readable storage medium may be any available medium that a computer can access or a data storage device such as a server, a data center or the like that contains and is integrated from one or more available media integration. The usable medium may be a magnetic medium (e.g., a floppy disk, a hard disk, a magnetic tape), an optical medium (e.g., a high-density digital video disc (DVD)), or a semiconductor medium (e.g., a solid state disk (SSD)) or the like.

It can be understood by those skilled in the art that the first, second and other numerical numbers involved in the present disclosure are only for the convenience of description, and are not used to limit the scope of the embodiments of the present disclosure, and also indicate the order.

At least one in the present disclosure may also be described as one or more, and a plurality may be two, three, four or more, which is not limited in the present disclosure. In the embodiments of the present disclosure, for a technical feature, the technical features distinguished by "first", "second", "third", "A", "B", "C" and "D" do not have an order or a size order.

The correspondence shown in each table in the present disclosure may be configured or predefined. The values of the information in each table are only examples, and may be configured as other values, which is not limited in the present disclosure. When configuring the correspondence between the information and parameters, it is not necessary to configure all the correspondence indicated in each table. For example, in the table of the present disclosure, the correspondence shown in some rows may not be configured. For another example, appropriate transformation adjustments may be made based on the above table, such as splitting, merging and so on. The names of the parameters indicated by the headings in the above tables may also be other names that can be understood by the communication device, and the values or representations of the parameters may also be other values or representations that can be understood by the communication device. Other data structures may also be used when the above tables are implemented, such as arrays, queues, containers, stacks, linear tables, pointers, linked lists, trees, graphs, structures, classes, piles, hash tables, etc.

Pre-definition in the present disclosure may be understood as definition, definition in advance, storage, pre-storage, pre-negotiation, pre-configuration, curing, or pre-firing.

Those ordinary skilled in the art may realize that the units and algorithm steps of various examples described in connection with the embodiments disclosed herein may be implemented in electronic hardware, or a combination of computer software and electronic hardware. Whether these functions are implemented in hardware or software depends on the specific application and design constraints of the technical scheme. Those skilled may use different methods to implement the described functions for each specific application, but such implementation should not be considered beyond the scope of the present disclosure.

It may be clearly understood by those skilled in the art that for the convenience and conciseness of description, the specific working processes of the systems, devices and units described above may refer to the corresponding processes in the aforementioned method embodiments, and will not be repeated here.

The above is only the specific implementation of the present disclosure, but the protection scope of the present disclosure is not limited to this. Any person familiar with the related art can easily think of changes or substitutions within the technical scope disclosed in the present disclosure, which should be included in the protection scope of the present disclosure. Therefore, the protection scope of the present disclosure should be based on the protection scope of the claims.

## Claims

1. A method for reporting a measurement report, applied to a first terminal, and comprising:
acquiring a sidelink discovery reference signal receiving power SD-RSRP and a sidelink reference signal receiving power SL-RSRP; and
determining to send the measurement report to a base station according to the SD-RSRP and the SL-RSRP.

2. The method according to claim 1, wherein the determining to send the measurement report to the base station according to the SD-RSRP and the SL-RSRP comprises:
determining that an entry condition is satisfied and to send the measurement report to the base station according to the SD-RSRP and the SL-RSRP.

3. The method according to claim 2, wherein the determining that the entry condition is satisfied and to send the measurement report to the base station comprises:
in response to that a duration of the entry condition being satisfied exceeds a first time threshold, recording a cell where the entry condition is satisfied, and determining to send the measurement report to the base station.

4. The method according to claim 2 or 3, wherein the determining that the entry condition is satisfied according to the SD-RSRP and the SL-RSRP comprises:
determining a first offset value, a second offset value, a first threshold value and a second threshold value; and
determining that the entry condition is satisfied according to the first offset value, the second offset value, the first threshold value, the second threshold value, the SD-RSRP and the SL-RSRP.

5. The method according to claim 4, wherein the determining that the entry condition is satisfied according to the first offset value, the second offset value, the first threshold value, the second threshold value, the SD-RSRP and the SL-RSRP comprises:
determining that the entry condition is satisfied, in case that the SL-RSRP plus the first offset value is less than the first threshold value or the SD-RSRP plus the second offset value is less than the second threshold value.

6. The method according to claim 4, wherein the determining that the entry condition is satisfied according to the first offset value, the second offset value, the first threshold value, the second threshold value, the SD-RSRP and the SL-RSRP comprises:
determining that the entry condition is satisfied, in case that the SL-RSRP plus the first offset value is greater than the first threshold value or the SD-RSRP plus the second offset value is greater than the second threshold value.

7. The method according to any one of claims 4 to 6, wherein the determining the first offset value, the second offset value, the first threshold value and the second threshold value comprises:
receiving a sidelink radio resource control RRC message of a second terminal; and
determining the first offset value, the second offset value, the first threshold value and the second threshold value according to the sidelink RRC message.

8. The method according to any one of claims 3 to 5, further comprising:
determine the second offset value and the second threshold value according to a resource pool for transmitting a discovery signal.

9. The method according to claim 8, wherein a plurality of resource pools available for transmitting the discovery signal are provided, and each resource pool corresponds to one second threshold value.

10. The method according to any one of claims 3 to 5, further comprising:
determining the first threshold value and a fourth offset value, and determining the second threshold value as a sum of the first threshold value and the fourth offset value.

11. The method according to claim 2 or 3, wherein the determining that the entry condition is satisfied according to the SD-RSRP and the SL-RSRP comprises:
determining a third offset value and a third threshold value, and acquiring a first channel measurement result of the first terminal and a cell; and
determining that the entry condition is satisfied according to the third offset value, the third threshold value and the first channel measurement result.

12. The method according to claim 11, wherein the determining that the entry condition is satisfied according to the third offset value, the third threshold value and the first channel measurement result comprises:
determining that the entry condition is satisfied, in case that the first channel measurement result plus the third offset value is greater than the third threshold value.

13. The method according to claim 11, wherein the determining that the entry condition is satisfied according to the third offset value, the third threshold value and the first channel measurement result comprises:
determining that the entry condition is satisfied, in case that the first channel measurement result plus the third offset value is less than the third threshold value.

14. The method according to any one of claims 11 to 13, wherein the determining the third offset value and the third threshold value comprises:
receiving a sidelink radio resource control RRC message of a second terminal; and
determining the third offset value and the third threshold value according to the sidelink RRC message.

15. The method according to claim 2 or 3, wherein the determining that the entry condition is satisfied according to the SD-RSRP and the SL-RSRP comprises:
determining a first offset value, a second offset value, a first threshold value, a second threshold value, a third offset value and a third threshold value, and acquiring a first channel measurement result between the first terminal and a cell; and
determining that the entry condition is satisfied according to the first offset value, the second offset value, the first threshold value, the second threshold value, the third offset value, the third threshold value, the first channel measurement result, the SD-RSRP and the SL-RSRP.

16. The method according to claim 15, wherein the determining that the entry condition is satisfied according to the first offset value, the second offset value, the first threshold value, the second threshold value, the third offset value, the third threshold value, the first channel measurement result, the SD-RSRP and the SL-RSRP comprises:
determining that the entry condition is satisfied, in case that the SL-RSRP plus the first offset value is less than the first threshold value or the SD-RSRP plus the second offset value is less than the second threshold value, and the first channel measurement result plus the third offset value is greater than the third threshold value.

17. The method according to claim 15, wherein the determining that the entry condition is satisfied according to the first offset value, the second offset value, the first threshold value, the second threshold value, the third offset value, the third threshold value, the first channel measurement result, the SD-RSRP and the SL-RSRP comprises:
determining that the entry condition is satisfied, in case that the SL-RSRP plus the first offset value is greater than the first threshold value or the SD-RSRP plus the second offset value is greater than the second threshold value, and the first channel measurement result plus the third offset value is less than the third threshold value.

18. The method according to any one of claims 15 to 17, wherein the determining the first offset value, the second offset value, the first threshold value, the second threshold value, the third offset value and the third threshold value comprises:
receiving a sidelink radio resource control RRC message of a second terminal; and
determining the first offset value, the second offset value, the first threshold value, the second threshold value, the third offset value and the third threshold value according to the sidelink RRC message.

19. The method according to any one of claims 15 to 17, wherein the determining the first offset value, the second offset value, the first threshold value, the second threshold value, the third offset value and the third threshold value comprises:
receiving a RRC message of a base station; and
determining the first offset value, the second offset value, the first threshold value, the second threshold value, the third offset value and the third threshold value according to the RRC message.

20. The method according to any one of claims 15 to 17, further comprising:
determining the second offset value and the second threshold value according to a resource pool for transmitting a discovery signal.

21. The method according to claim 20, wherein a plurality of resource pools available for transmitting the discovery signal are provided, and each resource pool corresponds to one second threshold value.

22. The method according to any one of claims 15 to 17, further comprising:
determining that the second offset value is equal to the first offset value, and/or that the second threshold value is equal to the first threshold value.

23. The method according to any one of claims 15 to 17, further comprising:
determining the first threshold value and a fourth offset value, and determining the second threshold value as a sum of the first threshold value and the fourth offset value.

24. The method according to any one of claims 2 to 23, wherein the measurement report comprises a cell or the first terminal where the entry condition is satisfied.

25. The method according to any one of claims 11 to 23, wherein the measurement report carries the SD-RSRP, the SL-RSRP and the first channel measurement result.

26. The method according to any one of claims 1 to 25, further comprising:
determining that a departure condition is satisfied according to the SD-RSRP and the SL-RSRP.

27. The method according to claim 26, further comprising: in response to that a duration of the departure condition being satisfied exceeds a second time threshold, in case that a recorded cell or first terminal where the entry condition is satisfied exists, deleting the recorded cell or first terminal where the entry condition is satisfied.

28. The method according to claim 26 or 27, wherein the determining that the departure condition is satisfied according to the SD-RSRP and the SL-RSRP comprises:
determining a first offset value, a second offset value, a first threshold value and a second threshold value; and
determining that the departure condition is satisfied according to the first offset value, the second offset value, the first threshold value, the second threshold value, the SD-RSRP and the SL-RSRP.

29. The method according to claim 28, wherein the determining that the departure condition is satisfied according to the first offset value, the second offset value, the first threshold value, the second threshold value, the SD-RSRP and the SL-RSRP comprises:
determining that the departure condition is satisfied, in case that the SL-RSRP minus the first offset value is greater than the first threshold value or the SD-RSRP minus the second offset value is greater than the second threshold value.

30. The method according to claim 28, wherein the determining that the departure condition is satisfied according to the first offset value, the second offset value, the first threshold value, the second threshold value, the SD-RSRP and the SL-RSRP comprises:
determining that the departure condition is satisfied, in case that the SL-RSRP minus the first offset value is less than the first threshold value or the SD-RSRP minus the second offset value is less than the second threshold value.

31. The method according to any one of claims 28 to 30, wherein the determining the first offset value, the second offset value, the first threshold value and the second threshold value comprises:
receiving a sidelink radio resource control RRC message of a second terminal; and
determining the first offset value, the second offset value, the first threshold value and the second threshold value according to the sidelink RRC message.

32. The method according to any one of claims 28 to 30, further comprising:
determining the second offset value and the second threshold value according to a resource pool for transmitting a discovery signal.

33. The method according to claim 32, wherein a plurality of resource pools available for transmitting the discovery signal are provided, and each resource pool corresponds to one second threshold value.

34. The method according to any one of claims 28 to 30, further comprising:
determining the first threshold value and a fourth offset value, and determining the second threshold value as a sum of the first threshold value and the fourth offset value.

35. The method according to claim 26 or 27, wherein the determining that the entry condition is satisfied according to the SD-RSRP and the SL-RSRP comprises:
determining a third offset value and a third threshold value, and acquiring a first channel measurement result of the first terminal and a cell; and
determining that the departure condition is satisfied according to the third offset value, the third threshold value and the first channel measurement result.

36. The method according to claim 35, wherein the determining that the entry condition is satisfied according to the third offset value, the third threshold value and the first channel measurement result comprises:
determining that the departure condition is satisfied, in case that the first channel measurement result minus the third offset value is less than the third threshold value.

37. The method according to claim 35, wherein the determining that the entry condition is satisfied according to the third offset value, the third threshold value and the first channel measurement result comprises:
determining that the departure condition is satisfied, in case that the first channel measurement result minus the third offset value is greater than the third threshold value.

38. The method according to any one of claims 35 to 37, wherein the determining the third offset value and the third threshold value comprises:
receiving a sidelink radio resource control RRC message of a second terminal; and
determining the third offset value and the third threshold value according to the sidelink RRC message.

39. The method according to claim 26 or 27, wherein the determining that the departure condition is satisfied according to the SD-RSRP and the SL-RSRP comprises:
determining a first offset value, a second offset value, a first threshold value, a second threshold value, a third offset value and a third threshold value, and acquiring a first channel measurement result of the first terminal and a cell; and
determining that the departure condition is satisfied according to the first offset value, the second offset value, the first threshold value, the second threshold value, the third offset value, the third threshold value and the first channel measurement result.

40. The method according to claim 39, wherein the determining that the entry condition is satisfied according to the first offset value, the second offset value, the first threshold value, the second threshold value, the third offset value, the third threshold value and the first channel measurement result comprises:
determining that the departure condition is satisfied, in case that the SL-RSRP minus the first offset value is greater than the first threshold value or the SD-RSRP minus the second offset value is greater than the second threshold value, and the first channel measurement minus the third offset value is less than the third threshold value.

41. The method according to claim 39, wherein the determining that the entry condition is satisfied according to the first offset value, the second offset value, the first threshold value, the second threshold value, the third offset value, the third threshold value and the first channel measurement result comprises:
determining that the departure condition is satisfied, in case that the SL-RSRP minus the first offset value is less than the first threshold value or the SD-RSRP minus the second offset value is less than the second threshold value, and the first channel measurement result minus the third offset value is greater than the third threshold value.

42. The method according to any one of claims 39 to 41, wherein the determining the first offset value, the second offset value, the first threshold value, the second threshold value, the third offset value and the third threshold value comprises:
receiving a sidelink radio resource control RRC message of a second terminal; and
determining the first offset value, the second offset value, the first threshold value, the second threshold value, the third offset value and the third threshold value according to the sidelink RRC message.

43. The method according to any one of claims 39 to 42, wherein the determining the first offset value, the second offset value, the first threshold value, the second threshold value, the third offset value and the third threshold value comprises:
receiving a RRC message of a base station; and
determining the first offset value, the second offset value, the first threshold value, the second threshold value, the third offset value and the third threshold value according to the RRC message.

44. The method according to any one of claims 39 to 42, further comprising:
determine the second offset value and the second threshold value according to a resource pool for transmitting a discovery signal.

45. The method according to claim 44, wherein a plurality of resource pools available for transmitting the discovery signal are provided, and each resource pool corresponds to one second threshold value.

46. The method according to any one of claims 39 to 42, further comprising:
determining the first threshold value and a fourth offset value, and determining the second threshold value as a sum of the first threshold value and the fourth offset value.

47. A method for reporting a measurement report, applied to a second terminal, and comprising:
sending a sidelink RRC message to a first terminal, wherein the sidelink RRC message comprises any one of:
a first offset value, a second offset value, a first threshold value and a second threshold value;
a third offset value and a third threshold value; and
a first offset value, a second offset value, a first threshold value, a second threshold value, a third offset value and a third threshold value.

48. The method according to claim 52, further comprising:
determining the second offset value according to a difference value between a SD-RSRP and a SL-RSRP.

49. A method for reporting a measurement report, applied to a base station, and comprising:
sending a RRC message to a first terminal,
wherein the RRC message comprises any one of:
a first offset value, a second offset value, a first threshold value and a second threshold value;
a third offset value and a third threshold value; and
a first offset value, a second offset value, a first threshold value, a second threshold value, a third offset value and a third threshold value.

50. A device for reporting a measurement report, comprising:
a data acquisition module configured to acquire a SD-RSRP and a SL-RSRP; and
a first sending module configured to determine to send the measurement report to a base station according to the SD-RSRP and the SL-RSRP.

51. A device for reporting a measurement report, comprising:
a second sending module configured to send a sidelink RRC message to a first terminal,
wherein the sidelink RRC message comprises any one of:
a first offset value, a second offset value, a first threshold value and a second threshold value;
a third offset value and a third threshold value; and
a first offset value, a second offset value, a first threshold value, a second threshold value, a third offset value and a third threshold value.

52. A device for reporting a measurement report, comprising:
a third sending module configured to send a RRC message to a first terminal,
wherein the RRC message comprises any one of:
a first offset value, a second offset value, a first threshold value and a second threshold value;
a third offset value and a third threshold value; and
a first offset value, a second offset value, a first threshold value, a second threshold value, a third offset value and a third threshold value.

53. A communication device, comprising a processor and a memory, wherein a computer program is stored in the memory, and the processor executes the computer program stored in the memory, to cause the device to execute the method according to any one claims 1 to 46; or, the processor executes the computer program stored in the memory, to cause the device to execute the method according to claim 47 or 48; or, the processor executes the computer program stored in the memory, to cause the device to execute the method according to claim 49.

54. A communication device, comprising: a processor and an interface circuit,
wherein the interface circuit is configured to receive code instructions and transmitting the code instructions to the processor,
the processor is configured to execute the code instructions to execute the method according to any one of claims 1 to 46, or to execute the code instructions to execute the method according to claim 47 or 48, or to execute the code instructions to execute the method according to claim 49.

55. A computer-readable storage medium for storing instructions which, when executed, cause the method according to any one of claims 1 to 46 to be realized, or cause the method according to claim 47 or 48 to be realized, or cause the method according to claim 49 to be realized.
